# EUROPEAN PATENT APPLICATION

(11) **EP 4 715 558 A1**
(43) Date of publication of application: **25.03.2026**
(21) Application number: 24829902.6
(22) Date of filing: 29.02.2024
(51) Int. Cl.: G06F 3/06

(54) **DATA STORAGE METHOD AND RELATED DEVICE**

(30) Priority: 29.06.2023 CN 202310786193; 20.10.2023 CN 202311368172
(71) Applicant: Huawei Cloud Computing Technologies Co., Ltd., Guiyang, Guizhou, 550025 (CN)
(72) Inventor: XIAO, Geng, Guiyang, Guizhou 550025 (CN); WU, Huatao, Guiyang, Guizhou 550025 (CN); BAI, Tao, Guiyang, Guizhou 550025 (CN)
(74) Representative: Gill Jennings & Every LLP
(86) International application number: PCT/CN2024/079269
(87) International publication number: WO 2025/001246

(57) **Abstract**

This application provides a data storage method and a related device. The method is applied to a cloud management platform. The cloud management platform is configured to manage an infrastructure that provides a cloud service, and the infrastructure includes a plurality of distributed storage devices. The method includes: receiving first request information of a tenant, where the first request information is for obtaining a first file; determining, based on the first request information, a first data block set in which the first file is located, where the first data block set includes one or more files, attributes of the one or more files are the same, and the first data block set is stored in one storage device; determining, based on the first data block set, a first storage device in which the first data block set is located; and reading the first file from the first storage device. In the method, at least one file with a same attribute is combined into one data block set, and the data block set is stored in one storage device, so that only a small quantity of storage devices need to be accessed during file retrieval, improving file retrieval efficiency.

## Description

This application claims priority to Chinese Patent Application No. 202310786193.7, filed with the China National Intellectual Property Administration on June 29, 2023 and entitled "INFORMATION ARCHIVING METHOD, APPARATUS, AND ANOTHER DEVICE", and to Chinese Patent Application No. 202311368172.X, filed with the China National Intellectual Property Administration on October 20, 2023 and entitled "DATA STORAGE METHOD AND RELATED DEVICE", both of which are incorporated herein by reference in their entireties.

### TECHNICAL FIELD

This application relates to the field of cloud computing, and more specifically, to a data storage method, a data storage apparatus, a computing device cluster, a computer program product, and a computer-readable storage medium.

### BACKGROUND

All existing cloud vendors can provide a data storage service for a tenant. For data that the tenant needs to store for long time at low costs, the cloud vendor can provide an offline storage device for storage. The offline storage device may include, for example, a non-volatile storage device such as a magnetic tape or an optical disc. However, when the tenant needs to retrieve data, the tenant needs to load the offline storage device to a driver and address a specified location to retrieve data. Therefore, a delay of retrieving data depends on a sum of queuing time for waiting for the driver to be idle, time for a mechanical arm to load the offline storage device, and addressing time. However, when the tenant needs to retrieve a large amount of data, limited by a quantity of drivers, time for retrieving data is long, and efficiency is low. In addition, for reliability of data storage, a currently commonly used storage technology is an erasure code (erasure code, EC) technology. In the EC technology, a file may be divided into a plurality of fragments, and the plurality of fragments are respectively stored in a plurality of different storage devices. When the EC technology is used for storage, to retrieve a file, a plurality of drivers need to be invoked to respectively access a plurality of storage devices, so that all data of the file can be retrieved. Therefore, file retrieval efficiency is low.

Therefore, how to improve file retrieval efficiency of a storage method becomes an urgent problem to be resolved.

### SUMMARY

This application provides a data storage method, a data storage apparatus, a computing device cluster, a computer program product, and a computer-readable storage medium, to improve file retrieval efficiency of the data storage method.

According to a first aspect, a data storage method is provided, and the method is applied to a cloud management platform. The cloud management platform is configured to manage an infrastructure that provides a cloud service, and the infrastructure includes a storage device cluster. The storage device cluster includes a plurality of distributed storage devices. The method includes: receiving first request information of a tenant, where the first request information is for obtaining a first file; determining, based on the first request information, a first data block set in which the first file is located, where the first data block set includes one or more files, attributes of the files included in the first data block set are the same, and the first data block set is stored in one of the plurality of distributed storage devices; determining, based on the first data block set, a first storage device in which the first data block set is located; and reading the first file from the first storage device.

In this embodiment of this application, the cloud management platform may combine at least one file with a same attribute into one data block set, and store the data block set in one storage device. In other words, one file of the tenant may be stored in one storage device to the fullest extent, and a plurality of files with a same attribute of the tenant may be stored in one storage device to the fullest extent. Therefore, when the one or more files are retrieved, a quantity of storage devices that need to be accessed is small. Therefore, time for retrieving the file can be reduced, and file retrieval efficiency can be improved.

With reference to the first aspect, in some implementations of the first aspect, second request information of the tenant is received, where the second request information is for obtaining a plurality of files, and attributes of the plurality of files are the same; a second data block set in which the plurality of files are located is determined based on the second request information; a second storage device in which the second data block set is located is determined based on the second data block set; and the plurality of files are read from the second storage device.

In this embodiment of this application, the cloud management platform may combine the plurality of files with the same attribute into one data block set, and store the data block set in one storage device, so that only one storage device needs to be accessed when the plurality of files are retrieved, improving file retrieval efficiency.

With reference to the first aspect, in some implementations of the first aspect, configuration information of the tenant is received, where the configuration information includes an attribute of each of at least one file; N data block sets are determined based on the configuration information and the at least one file, where each of the N data block sets includes one or more files in the at least one file, attributes of the files included in each data block set are the same, the N data block sets include the first data block set, and N is a positive integer greater than or equal to 1; and the N data block sets are respectively stored in N storage devices in at least one distributed storage device.

In this embodiment of this application, the cloud management platform may combine the at least one file with the same attribute into one data block set, and store the data block set in one storage device, so that when the one or more files are retrieved, only a small quantity of storage devices need to be accessed, to reduce file retrieval time and improve file retrieval efficiency.

With reference to the first aspect, in some implementations of the first aspect, the attribute of the file includes at least one of the following: identification information of a storage bucket to which the file belongs, a directory in which the file is located, storage time of the file, a storage type of the file, a size of the file, and a name of the file, and the storage type of the file indicates an access frequency of the file.

In this embodiment of this application, the plurality of files with the same attribute may be combined into one data block set based on different attributes of the files, so that file retrieval efficiency is improved when the tenant needs to retrieve a file.

With reference to the first aspect, in some implementations of the first aspect, at least one file set is determined based on the attribute of each of the at least one file, where each file set includes all files with a same attribute in the at least one file; and the N data block sets are determined based on the at least one file set, where each data block set includes one or more files in one of the at least one file set, and a size of each data block set is less than or equal to a first preset threshold.

In this embodiment of this application, the at least one file of the tenant may be divided into different file sets based on the attribute of the file, so that files in one file set are combined, and at least one data block set is determined.

With reference to the first aspect, in some implementations of the first aspect, M check data block sets are determined based on the N data block sets, where the M check data block sets are for recovering one or more of the N data block sets when a fault occurs, and M is a positive integer greater than or equal to 1; and the M check data block sets are stored in M storage devices in the at least one distributed storage device, where the M storage devices and the N storage devices are different storage devices.

In this embodiment of this application, when the N data block sets are stored, the M check data block sets may be further determined based on the N data block sets, so that recovery is performed when a part of the N data block sets are faulty, improving data storage reliability.

With reference to the first aspect, in some implementations of the first aspect, each data block set includes P data blocks, each check data block set includes P check data blocks, and a p^{th} check data block in each of the M check data block sets is determined based on a p^{th} data block in each of the N data block sets, where a size of the p^{th} data block and/or a size of the p^{th} check data block are/is less than or equal to a second preset threshold, p=1, ..., or P, and P is a positive integer greater than or equal to 1.

In this embodiment of this application, each of the N data block sets may be divided into at least one data block, and one check data block in the M check data block sets is determined based on one data block in each data block set, to determine the M check data block sets, and further reduce computing resource overheads and internal memory overheads when the M check data block sets are determined.

With reference to the first aspect, in some implementations of the first aspect, the p^{th} data block in each of the N data block sets is respectively stored in the N storage devices; and the p^{th} check data block in each of the M check data block sets is respectively stored in the M storage devices.

In this embodiment of this application, the N data block sets and the M check data block sets may be respectively stored in N+M storage devices, to implement distributed storage, and further improve data storage reliability.

With reference to the first aspect, in some implementations of the first aspect, P data blocks in one data block set are continuously stored in one storage device, and P check data blocks in one check data block set are continuously stored in one storage device.

In this embodiment of this application, one data block set may be continuously stored in a storage device, so that when retrieving a file, the tenant can retrieve the file by reading only continuous storage space in one storage device, improving file retrieval efficiency.

With reference to the first aspect, in some implementations of the first aspect, attributes of the N data block sets are the same, an attribute of each data block set is determined based on an attribute of a file included in each data block set, and the N storage devices are a group of storage devices.

In this embodiment of this application, the N data block sets with the same attribute may be stored in one group of storage devices, so that efficiency of retrieving a plurality of files can be improved.

For example, the group of storage devices may be a group of storage devices whose physical locations are close to each other. For example, the group of storage devices may be storage devices located on a same rack. Alternatively, the group of storage devices may be storage devices located at a same location on different racks. Alternatively, the group of storage devices may be a group of storage devices whose identification information is similar. For example, when the identification information of the group of storage devices is a digit, identification information of storage devices in the group of storage devices may be in ascending or descending order.

With reference to the first aspect, in some implementations of the first aspect, a first mapping relationship is generated, where the first mapping relationship indicates identification information of a data block set in which each file is located.

In this embodiment of this application, when the N data block sets are generated, a correspondence between each data block set and each file may be recorded, to help the tenant retrieve the file.

With reference to the first aspect, in some implementations of the first aspect, a second mapping relationship is generated, where the second mapping relationship indicates identification information of a storage device in which each data block set is located.

In this embodiment of this application, when the N data block sets are stored in the N storage devices, a correspondence between each storage device and each data block set may be recorded, to help the tenant retrieve the file.

With reference to the first aspect, in some implementations of the first aspect, the at least one distributed storage device is a non-volatile storage device.

In this embodiment of this application, a storage device that stores a file or a data block set may be a non-volatile storage device, to improve data storage reliability.

According to a second aspect, a data storage apparatus is provided. The apparatus includes modules configured to implement any one of the first aspect or the possible implementations of the first aspect.

According to a third aspect, this application provides a computing device cluster, including at least one computing device. Each computing device includes a processor and a memory. The processor of the at least one computing device is configured to execute instructions stored in the memory of the at least one computing device, to cause the computing device cluster to perform the method in any one of the first aspect and the implementations of the first aspect.

According to a fourth aspect, this application provides a computer program product including instructions. When the instructions are run by a computer device cluster, the computer device cluster is caused to perform the method in any one of the first aspect and the implementations of the first aspect.

According to a fifth aspect, this application provides a computer-readable storage medium, including computer program instructions. When the computer program instructions are executed by a computing device cluster, the computing device cluster performs the method in any one of the first aspect and the implementations of the first aspect.

### BRIEF DESCRIPTION OF DRAWINGS

FIG. 1 is a diagram of a structure of a data storage system according to an embodiment of this application;
FIG. 2 is a diagram of a structure of a data storage system according to another embodiment of this application;
FIG. 3 is a schematic flowchart of a data storage method according to an embodiment of this application;
FIG. 4 is a schematic flowchart of a data storage method according to another embodiment of this application;
FIG. 5 is a diagram of a second graphical interface 500 according to an embodiment of this application;
FIG. 6 is a diagram of determining a data block set according to an embodiment of this application;
FIG. 7 is a schematic flowchart of a data storage method according to another embodiment of this application;
FIG. 8 is a diagram of determining a check data block set according to an embodiment of this application;
FIG. 9 is a diagram of storing N data block sets and M check data block sets in N+M storage devices according to an embodiment of this application;
FIG. 10 is a diagram of a structure of a data storage apparatus according to an embodiment of this application;
FIG. 11 is a diagram of a structure of a computing device according to an embodiment of this application;
FIG. 12 is a diagram of a structure of a computing device cluster according to an embodiment of this application; and
FIG. 13 is a diagram in which computing devices 1100A and 1100B are connected through a network according to an embodiment of this application.

### DESCRIPTION OF EMBODIMENTS

The following describes technical solutions of this application with reference to accompanying drawings.

All aspects, embodiments, or features are presented in embodiments of this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Moreover, in embodiments of this application, a term "example", "for example", or the like is used to represent giving an example, an illustration, or a description. Any embodiment or design solution described as an "example" in embodiments of this application should not be explained as being more preferred or having more advantages than another embodiment or design solution. Exactly, use of the term example is intended to present a concept in a specific manner.

A service scenario described in embodiments of this application is intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of a technology and emergence of a new service scenario.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "have", and their variants all mean "include but are not limited to", unless otherwise specifically emphasized in another manner.

In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A method in embodiments of this application may be applied to various cloud management platforms. The cloud management platform is configured to manage an infrastructure that provides a cloud service, and the infrastructure includes a storage device cluster. The storage device cluster includes at least one distributed storage device. The at least one distributed storage device may be a non-volatile storage device, or the at least one distributed storage device includes a non-volatile storage medium. The at least one distributed storage device may be, for example, a magnetic tape or an optical disc. This is not limited in embodiments of this application.

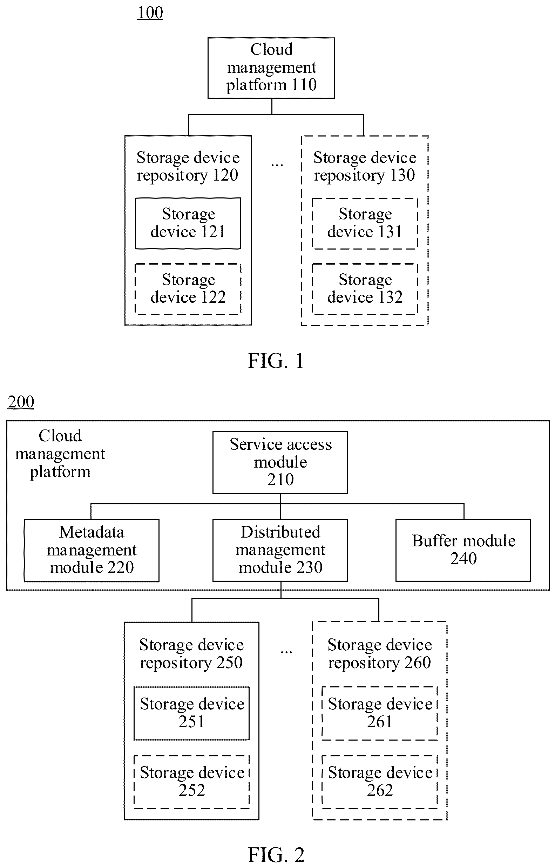

FIG. 1 is a diagram of a structure of a data storage system according to an embodiment of this application. The data storage system 100 in FIG. 1 may include a cloud management platform 110 and a storage device 121.

The cloud management platform 110 is configured to manage an infrastructure that provides a cloud service, and the infrastructure includes a storage device cluster. The storage device cluster includes the storage device 121, and the storage device 121 is a distributed storage device. The cloud management platform 110 may provide at least one cloud service for a tenant. The at least one cloud service may include, for example, a storage service or a computing service. The tenant is a public cloud tenant who has registered a public cloud account and purchased public cloud resources. After purchasing a storage service on the cloud management platform 110, the tenant may upload a to-be-stored file or to-be-stored data to the cloud management platform 110, to store the to-be-stored file or data in the storage device 121. The storage device 121 is a non-volatile storage device. The tenant may further read a stored file or stored data from the cloud management platform 110.

In some embodiments, the storage device 121 may perform storage based on a file. Alternatively, the storage device 121 may perform storage based on an object. In other words, the storage device 121 may store at least one file of the tenant.

In some embodiments, the storage device 121 is disposed in a storage device repository 120. The storage device repository 120 may include at least one storage device, for example, the storage device 121 and/or a storage device 122. The storage device repository 120 may further correspond to one or more drivers, and each driver may receive first indication information from the cloud management platform 110. The first indication information indicates the driver to read data or a file in the storage device 121 and/or the storage device 122. The driver may further read data or a file in the storage device 121 and/or the storage device 122 based on the first indication information. When the storage device repository 120 includes a plurality of storage devices (for example, the storage device 121 and the storage device 122), the storage device repository 120 may further include at least one mechanical apparatus (for example, a mechanical arm). Each mechanical apparatus may be configured to determine a to-be-read storage device (for example, the storage device 121) from the plurality of storage devices in the storage device repository 120 and place the storage device 121 in the driver.

For example, the storage device 121 may be a magnetic tape or an optical disc. The storage device repository 120 may be a magnetic tape repository or an optical disc repository.

In some embodiments, the cloud management platform 110 may manage at least one storage device repository, for example, the storage device repository 120 and/or a storage device repository 130. The storage device repository 130 may include at least one storage device, for example, a storage device 131 and/or a storage device 132. The storage device repository 130 is similar to the storage device repository 120. Details are not described herein again. The storage device 131 and the storage device 132 are similar to the storage device 121. Details are not described herein again.

In some embodiments, storage devices included in a storage device repository may belong to a same storage device cluster. Alternatively, storage devices included in a plurality of storage device repositories may belong to a same storage device cluster. Alternatively, at least one storage device managed by the cloud management platform 110 may belong to one storage device cluster. A plurality of storage devices in one storage device cluster may be directly connected or connected through a network. The network may be, for example, a wide area network or a local area network.

The cloud management platform 110 may receive first request information of the tenant, where the first request information is for obtaining a first file. The first file may be any one of the at least one file stored by the tenant. The cloud management platform 110 may further determine, based on the first request information, a first data block set in which the first file is located. The first data block set includes one or more files, and attributes of the files included in the first data block set are the same. The first data block set is stored in one of a plurality of distributed storage devices. The cloud management platform 110 may further determine, based on the first data block set, a first storage device in which the first data block set is located, and read the first file from the first storage device.

In some embodiments, the cloud management platform 110 may receive second request information of the tenant, where the second request information is for obtaining a plurality of files. Attributes of the plurality of files are the same. The cloud management platform 110 may further determine, based on the second request information, a second data block set in which the plurality of files are located. In other words, the plurality of files are located in a same data block set. The cloud management platform 110 may further determine, based on the second data block set, a second storage device in which the second data block set is located, and read the plurality of files from the second storage device.

In some embodiments, the cloud management platform 110 may receive configuration information of the tenant, where the configuration information includes an attribute of each of the at least one file of the tenant. The cloud management platform 110 may further determine N data block sets based on the configuration information and the at least one file. Each of the N data block sets includes one or more files of the tenant, attributes of the files included in each data block set are the same, and N is a positive integer greater than or equal to 1. The cloud management platform 110 may further separately store the N data block sets in N storage devices in the at least one distributed storage device.

In some embodiments, the attribute of the file may include at least one of the following: identification information of a storage bucket (bucket) to which the file belongs, a directory in which the file is located, storage time of the file, a storage type of the file, a size of the file, and a name of the file. The storage type of the file indicates an access frequency of the file.

In some embodiments, the cloud management platform 110 may determine M check data block sets based on the N data block sets. The M check data block sets are for recovering one or more of the N data block sets when a fault occurs, and M is a positive integer greater than or equal to 1. The cloud management platform 110 may further store the M check data block sets in M storage devices in the at least one distributed storage device. The M storage devices and the N storage devices are different storage devices.

In some embodiments, the cloud management platform 110 may generate a first mapping relationship. The first mapping relationship may indicate identification information of a data block set in which each file is located. The cloud management platform 110 may further generate a second mapping relationship. The second mapping relationship indicates identification information of a storage device in which each data block set is located.

FIG. 2 is a diagram of a structure of another data storage system according to an embodiment of this application. The data storage system in FIG. 2 includes a cloud management platform. The cloud management platform may manage a service access module 210, a metadata management module 220, a distributed management module 230, a buffer module 240, and a storage device repository 250. The cloud management platform may be, for example, the cloud management platform 110 in FIG. 1.

The service access module 210 may provide an object interface and/or a file interface. The object interface may be configured to receive at least one object stored by a tenant, and each object is stored in a file form. The file interface may receive at least one file stored by the tenant. The service access module 210 may further send the at least one file stored by the tenant to the distributed management module 230 and/or the buffer module 240. The service access module 210 may further receive metadata of each file stored by the tenant. The service access module 210 may send the metadata of each file to the metadata management module 220.

The metadata management module 220 may manage the metadata of each file stored by the tenant. The metadata of the file may be for describing an attribute of the file. The metadata of the file may include at least one of the following: identification information of a storage bucket to which the file belongs, a directory in which the file is located, storage time of the file, a storage type of the file, a size of the file, a name of the file, and a storage location of the file. The storage type of the file indicates an access frequency of the file.

For example, the storage type of the file may include at least one of the following types: standard storage, infrequently accessed storage, archive storage, and deep archive storage. A file access frequency indicated by the standard storage is higher than a file access frequency indicated by the infrequently accessed storage, a file access frequency indicated by the infrequently accessed storage is higher than a file access frequency indicated by the archive storage, and a file access frequency indicated by the archive storage is higher than an access frequency indicated by the deep archive storage.

In some embodiments, the tenant may configure the storage type of the file when uploading the file. Alternatively, when uploading the file, the tenant configures the storage type of the file as a first storage type. The metadata management module 220 may modify the storage type of the file to a second storage type after the file satisfies a first preset condition. The second storage type is different from the first storage type. An access frequency indicated by the second storage type is lower than an access frequency indicated by the first storage type. The first preset condition may be determined by the metadata management module 220, or may be configured by the tenant.

For example, when uploading the file, the tenant can directly configure the storage type of the file as a deep archive storage type. Alternatively, when uploading the file, the tenant can configure the storage type of the file as a standard storage type. The metadata management module 220 may modify the storage type of the file to the deep archive storage type when the file is cold data whose actual storage time is more than 90 days.

The buffer module 240 may temporarily store the at least one file of the tenant. When a data amount of the file buffered in the buffer module 240 is greater than or equal to a third preset threshold, the buffer module 240 may send the buffered file to the distributed management module 230. The buffer module 240 may include a mechanical hard disk drive (hard disk drive, HDD), a solid-state drive (solid-state drive, SSD), and/or the like. A value of the third preset threshold is not limited in this embodiment of this application.

The distributed management module 230 may perform distributed storage on the at least one file of the tenant. For example, the distributed management module 230 may generate an erasure code (EC) or a replica (replica) based on the at least one file, and then store the at least one file, the erasure code, or the replica in the at least one storage device. The distributed management module 230 may manage at least one storage device repository, for example, a storage device repository 250 and/or a storage device repository 260. Each storage device repository may include at least one storage device. For example, the storage device repository 250 may include a storage device 251 and/or a storage device 252, and the storage device repository 260 may include a storage device 261 and/or a storage device 262.

In some embodiments, the service access module 210, the metadata management module 220, the distributed management module 230, and the buffer module 240 may be integrated into a same device. Alternatively, the service access module 210, the metadata management module 220, the distributed management module 230, and the buffer module 240 may be integrated into a plurality of devices. A module included in each of the plurality of devices is not limited in this embodiment of this application.

The cloud management platform in FIG. 1 or FIG. 2 may combine at least one file with a same attribute into one data block set, and store the data block set in one storage device. In other words, one file of the tenant may be stored in one storage device to the fullest extent, and a plurality of files with a same attribute of the tenant may be stored in one storage device to the fullest extent. Therefore, when the one or more files are retrieved, a quantity of storage devices that need to be accessed is small. Therefore, time for retrieving the file can be reduced, and file retrieval efficiency can be improved.

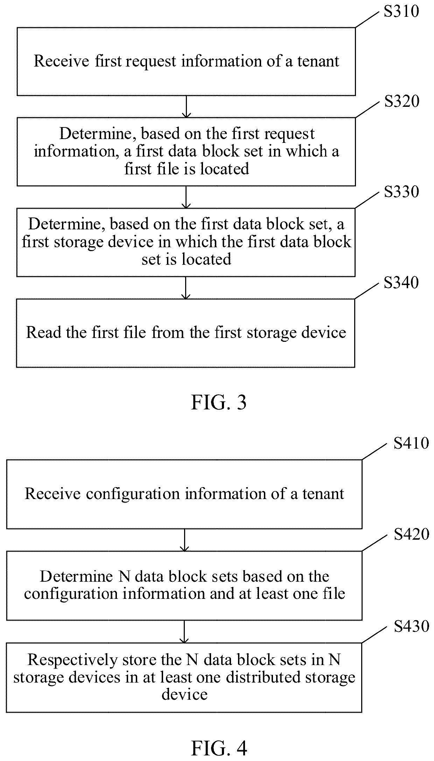

FIG. 3 is a schematic flowchart of a data storage method according to an embodiment of this application. The method in FIG. 3 may be performed by the cloud management platform in FIG. 1 or FIG. 2. The method in FIG. 3 includes the following steps.

Step S310: Receive first request information of a tenant.

The cloud management platform may receive the first request information of the tenant, where the first request information is for obtaining a first file. The first file is any one of at least one file that is stored by the tenant in advance.

Optionally, the cloud management platform may provide a first graphical interface for the tenant, so that the tenant may request to obtain the first file in the first graphical interface. Content specifically displayed in the first graphical interface is not limited in this embodiment of this application.

Step S320: Determine, based on the first request information, a first data block set in which the first file is located.

The cloud management platform may determine, based on the first request information, the first data block set in which the first file is located. The first data block set includes one or more files, and attributes of the files included in the first data block set are the same. The first data block set is stored in one of a plurality of distributed storage devices.

Optionally, the cloud management platform may determine the first data block set based on a first mapping relationship and the first request information. The first mapping relationship may indicate identification information of a data block set in which each file is located. For the first mapping relationship, refer to descriptions in step S720.

For example, assuming that the first mapping relationship is represented in a table form (as shown in Table 4 below), the cloud management platform may determine, by querying a first mapping relationship table, the first data block set corresponding to the first file.

Step S330: Determine, based on the first data block set, a first storage device in which the first data block set is located.

Optionally, the cloud management platform may determine, based on a second mapping relationship and the first data block set, the first storage device in which the first data block set is located. The first storage device is one of the plurality of distributed storage devices. The second mapping relationship indicates identification information of a storage device in which each data block set is located. For the second mapping relationship, refer to descriptions in step S740.

For example, assuming that the second mapping relationship is represented in a table form (as shown in Table 5 below), the cloud management platform may determine, by querying a second mapping relationship table, the first storage device corresponding to the first data block set.

Step S340: Read the first file from the first storage device.

After determining the first storage device, the cloud management platform may directly read the first file from the first storage device.

Optionally, the first mapping relationship may further indicate an offset address of each file in a corresponding data block set and/or an internal storage bucket in which each file is located. The second mapping relationship may further indicate an offset address of each data block set in a corresponding storage device. The cloud management platform may determine a storage address of the first data block set in the first storage device and a storage address of the first file in the first data block set based on the first mapping relationship and the second mapping relationship, to directly read the first file from the first storage device.

Optionally, the cloud management platform may receive second request information of the tenant, where the second request information is for obtaining a plurality of files, and attributes of the plurality of files are the same. Because the attributes of the plurality of files are the same, the plurality of files may be located in a same data block set. The cloud management platform may further determine, based on the second request information, a second data block set in which the plurality of files are located. A specific implementation is similar to that of step S320. Details are not described herein again. The cloud management platform may further determine, based on the second data block set, a second storage device in which the second data block set is located. A specific implementation is similar to that of step S330. Details are not described herein again. The cloud management platform may further directly read the plurality of files from the second storage device. A specific implementation is similar to that of step S340. Details are not described herein again.

In this embodiment of this application, the cloud management platform may obtain the stored file for the tenant based on a request of the tenant. The cloud management platform may combine at least one file with a same attribute into one data block set, and store the data block set in one storage device. In other words, one file of the tenant may be stored in one storage device to the fullest extent, and a plurality of files with a same attribute of the tenant may be stored in one storage device to the fullest extent. Therefore, when the one or more files are retrieved, a quantity of storage devices that need to be accessed is small. Therefore, time for retrieving the file can be reduced, and file retrieval efficiency can be improved.

FIG. 4 is a schematic flowchart of a data storage method according to an embodiment of this application. The method in FIG. 4 may be performed by the cloud management platform in FIG. 1 or FIG. 2. The method in FIG. 4 includes the following steps.

Step S410: Receive configuration information of a tenant.

The cloud management platform may receive the configuration information of the tenant, where the configuration information includes an attribute of each of at least one file of the tenant.

Optionally, the attribute of each file may include at least one of the following: identification information of a storage bucket to which the file belongs, a directory in which the file is located, storage time of the file, a storage type of the file, a size of the file, and a name of the file. The storage time of the file may include first storage time and/or second storage time. The first storage time indicates storage time of the file, in other words, when actual storage time of the file is greater than or equal to the first storage time, the cloud management platform may delete the file. The second storage time of the file indicates archive time of the file, in other words, when the actual storage time of the file is greater than or equal to the second storage time, the cloud management platform may set the storage type of the file to a preset storage type (for example, a deep archive storage type). The storage type of the file may indicate an access frequency of the file.

When the file belongs to an object storage system, the name of the file may indicate the directory in which the file is located. For example, the name of the file may be "directory 1/file 1", where "directory 1" is the directory in which the file is located.

Optionally, the cloud management platform may provide a second graphical interface for the tenant, so that the tenant may select or upload the configuration information in the second graphical interface.

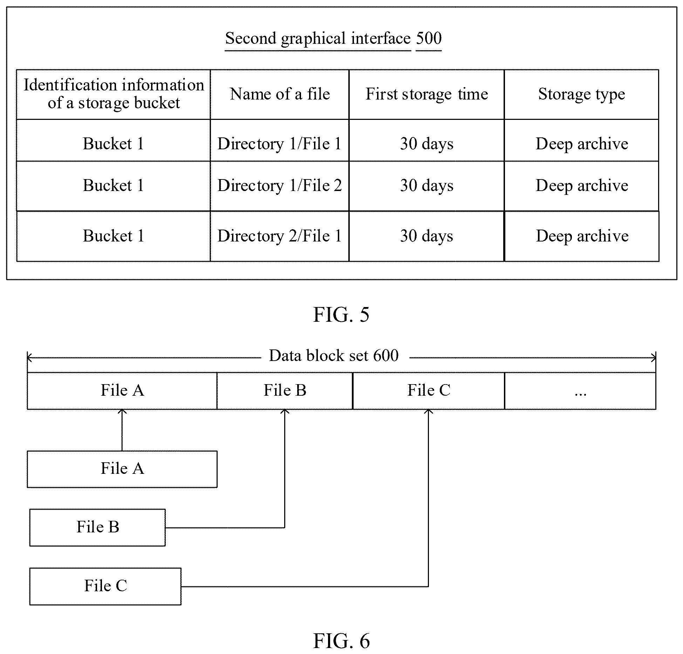

For example, the second graphical interface that may be provided by the cloud management platform is shown in FIG. 5. FIG. 5 is a diagram of a second graphical interface 500 according to an embodiment of this application. As shown in the second graphical interface 500 in FIG. 5, the tenant may select or enter the following four items in the second graphical interface 500: the identification information of the storage bucket, the name of the file, the first storage time, and the storage type. The tenant may select or enter, in a selection box or an input box corresponding to the "identification information of the storage bucket", the identification information of the storage bucket in which the file is located, for example, a name or a number of the storage bucket in which the file is located. The tenant may select or enter the name of the file in a selection box or an input box corresponding to the "name of the file". The tenant may select or enter the first storage time of the file in a selection box or an input box corresponding to the "first storage time". The tenant may select or enter the storage type of the file in a selection box or an input box corresponding to the "storage type".

As shown in FIG. 5, the configuration information may include the following content: First storage time of a file 1 in a directory 1 in a bucket 1 is 30 days, and a storage type of the file 1 is the deep archive storage type; first storage time of a file 2 in a directory 1 in the bucket 1 is 30 days, and a storage type of the file 2 is the deep archive storage type; and first storage time of a file 1 in a directory 2 in bucket 1 is 30 days, and a storage type of the file 1 is the deep archive storage type.

It should be understood that the second graphical interface 500 is merely an example for description. The cloud management platform may provide a second graphical interface in another form for the tenant, so that the tenant may select or enter the configuration information in the second graphical interface in the another form.

Optionally, when the tenant uploads the file, the cloud management platform may display the second graphical interface 500 to the tenant, to receive the configuration information of the tenant.

Step S420: Determine N data block sets based on the configuration information and the at least one file.

The cloud management platform may determine the N data block sets based on the configuration information and the at least one file. Each of the N data block sets includes one or more files in the at least one file, attributes of the files included in each data block set are the same, and N is a positive integer greater than or equal to 1.

For example, assuming that the configuration information indicates that attributes of a file A, a file B, and a file C are the same, the cloud management platform may determine one data block set based on the file A, the file B, and the file C, as shown in FIG. 6. FIG. 6 is a diagram of determining a data block set according to an embodiment of this application. FIG. 6 includes the file A, the file B, and the file C, and attributes of the three files are the same. The cloud management platform may directly arrange and combine the file A, the file B, and the file C in sequence, to obtain a data block set 600.

Optionally, a size of each data block set may be less than or equal to a first preset threshold. A value of the first preset threshold is not limited in this embodiment of this application. For example, the value of the first preset threshold may be 1 gigabyte (gigabyte, GB) or 10 GB.

When determining the data block set, the cloud management platform may divide one file into a plurality of parts, so that the plurality of parts of the file respectively belong to different data block sets, and a size of each data block set is less than or equal to the first preset threshold.

For example, assuming that a sum of sizes of the file A, the file B, and the file C is greater than the first preset threshold, the cloud management platform may divide the file C into a first part and a second part. The cloud management platform may determine a data block set A based on the file A, the file B, and the first part of the file C, and may further determine a data block set B based on the second part of the file C and another file. The another file is a file other than the file A, the file B, and the file C. Both the size of the data block set A and the size of the data block set B are less than or equal to the first preset threshold.

When determining the data block set, the cloud management platform may determine, based on an allocation algorithm, at least one file with a same attribute as at least one data block set with a similar size. In other words, the cloud management platform may not divide the file into a plurality of parts, but directly determine the N data block sets to the fullest extent based on the allocation algorithm, and sizes of the N data block sets are within a preset range. The preset range is not limited in this embodiment of this application. A specific implementation of the allocation algorithm is not limited in this embodiment of this application.

Optionally, the cloud management platform may determine at least one file set based on an attribute of each of the at least one file. Each file set includes all files with a same attribute in the at least one file. The cloud management platform may further determine the N data block sets based on the at least one file set. Each of the N data block sets includes one or more files in one file set, and a size of each data block set is less than or equal to the first preset threshold.

Optionally, when determining the data block set, the cloud management platform may further generate a first mapping relationship. The first mapping relationship may indicate a storage location of each file. The storage location of each file may include identification information of a data block set in which each file is located. The storage location of each file may further include an offset address of each file in the data block set and/or an internal storage bucket in which each file is located.

Step S430: Respectively store the N data block sets in N storage devices in at least one distributed storage device.

The cloud management platform may respectively store the determined N data block sets in the N storage devices, in other words, the cloud management platform may store one data block set in one storage device, and the N data block sets are located in different storage devices. The N storage devices belong to a storage device cluster managed by the cloud management platform, and the storage device cluster includes at least one distributed storage device.

Optionally, the N storage devices may belong to a same storage device repository. Alternatively, at least two of the N storage devices may belong to different storage device repositories. The storage device repository may be the storage device repository 120 in FIG. 1, and the storage device may be the storage device 121 in FIG. 1.

Optionally, when storing the N data block sets in the N storage devices, the cloud management platform may further generate a second mapping relationship. The second mapping relationship indicates identification information of a storage device in which each data block set is located. The second mapping relationship may further indicate an offset address of each data block set in the storage device.

Optionally, before step S430, the cloud management platform may determine M check data block sets based on the N data block sets. The M check data block sets are for recovering one or more of the N data block sets when a fault occurs, and M is a positive integer greater than or equal to 1. The cloud management platform may further store the M check data block sets in M storage devices in the at least one distributed storage device, where the M storage devices and the N storage devices are different storage devices.

The cloud management platform may combine at least one file with a same attribute into one data block set, and store the data block set in one storage device. In other words, one file of the tenant may be stored in one storage device to the fullest extent, and a plurality of files with a same attribute of the tenant may be stored in one storage device to the fullest extent. Therefore, when the one or more files are retrieved, a quantity of storage devices that need to be accessed is small. Therefore, time for retrieving the file can be reduced, and file retrieval efficiency can be improved.

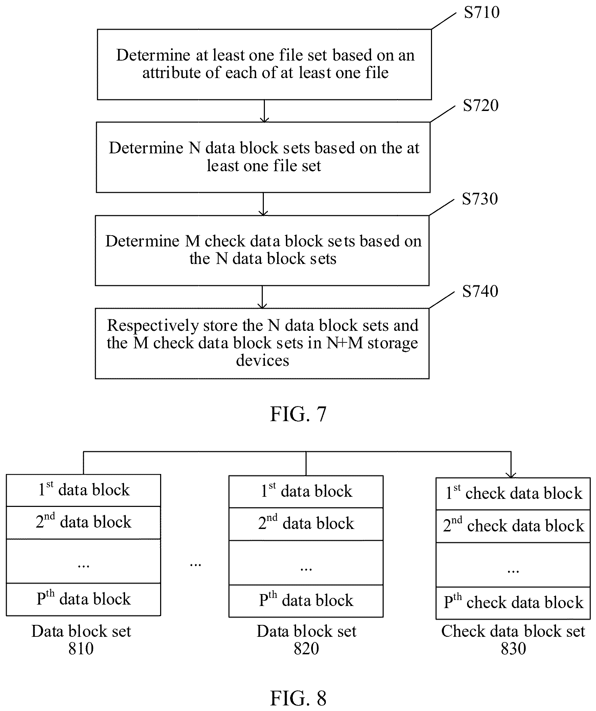

FIG. 7 is a schematic flowchart of a data storage method according to an embodiment of this application. The method in FIG. 7 may be performed by the cloud management platform in FIG. 1 or FIG. 2. The method in FIG. 7 includes the following steps.

Step S710: Determine at least one file set based on an attribute of each of at least one file.

The cloud management platform may determine the at least one file set based on the attribute of each file of a tenant. Each of the at least one file set may include all files with a same attribute in the at least one file of the tenant.

Optionally, the cloud management platform may directly store all the files with the same attribute in one file set based on the attribute of each file. Alternatively, the cloud management platform may classify and label each file based on the attribute of each file. A same label may be set for files with a same attribute. The cloud management platform may further classify the files with the same label into a same file set.

For example, it is assumed that configuration information of the tenant is shown in Table 1 below.

**Table 1 Configuration information table of a tenant**

| Identification information of a storage bucket | Name of a file | First storage time | Storage type |
|---|---|---|---|
| Bucket 1 | Directory 1/File 1 | 30 days | Deep archive |
| Bucket 1 | Directory 1/File 2 | 30 days | Deep archive |
| Bucket 1 | Directory 1/File 3 | 90 days | Deep archive |
| Bucket 1 | Directory 1/File 4 | 30 days | Deep archive |
| Bucket 1 | Directory 2/File 1 | 30 days | Deep archive |
| Bucket 1 | Directory 2/File 2 | 60 days | Deep archive |
| Bucket 1 | Directory 2/File 3 | 30 days | Deep archive |
| Bucket 1 | Directory 2/File 4 | 30 days | Deep archive |
| Bucket 2 | Directory 1/File 1 | 30 days | Deep archive |
| Bucket 2 | Directory 1/File 2 | 30 days | Deep archive |
| Bucket 2 | Directory 1/File 3 | 30 days | Deep archive |

It is assumed that the attribute of the file includes the following four items: the identification information of the storage bucket, a directory in which the file is located, and the first storage time. A classification label information table that may be obtained by classifying and labelling each file based on the attribute of the file is shown in Table 2 below.

**Table 2 Classification label information table**

| Identification information of a storage bucket | Name of a file | First storage time | Storage type | Label information |
|---|---|---|---|---|
| Bucket 1 | Directory 1/File 1 | 30 days | Deep archive | Label 1 |
| Bucket 1 | Directory 1/File 2 | 30 days | Deep archive | Label 1 |
| Bucket 1 | Directory 1/File 3 | 90 days | Deep archive | Label 2 |
| Bucket 1 | Directory 1/File 4 | 30 days | Deep archive | Label 1 |
| Bucket 1 | Directory 2/File 1 | 30 days | Deep archive | Label 3 |
| Bucket 1 | Directory 2/File 2 | 60 days | Deep archive | Label 4 |
| Bucket 1 | Directory 2/File 3 | 30 days | Deep archive | Label 3 |
| Bucket 1 | Directory 2/File 4 | 30 days | Deep archive | Label 3 |
| Bucket 2 | Directory 1/File 1 | 30 days | Deep archive | Label 5 |
| Bucket 2 | Directory 1/File 2 | 30 days | Deep archive | Label 5 |
| Bucket 2 | Directory 1/File 3 | 30 days | Deep archive | Label 5 |

As shown in Table 2, because the storage buckets to which the file 1, the file 2, and the file 4 in the directory 1 in the bucket 1 belong, directories in which the file 1, the file 2, and the file 4 in the directory 1 in the bucket 1 are located, and the first storage time of the file 1, the file 2, and the file 4 in the directory 1 in the bucket 1 are the same, the label information of the file 1, the file 2, and the file 4 in the directory 1 in the bucket 1 is all the label 1. Because the first storage time of the file 3 in the directory 1 in the bucket 1 is different from the first storage time of the file 1 in the directory 1 in the bucket 1, the label information of the file 3 in the directory 1 in the bucket 1 is the label 2. Because the storage buckets to which the file 1, the file 3, and the file 4 in the directory 2 in the bucket 1 belong, the directories in which the file 1, the file 3, and the file 4 in the directory 2 in the bucket 1 are located, and the first storage time of the file 1, the file 3, and the file 4 in the directory 2 in the bucket 1 are the same, and the directories in which the file 1, the file 3, and the file 4 in the directory 2 in the bucket 1 are located are different from the directories in which the file 1 and the file 3 in the directory 1 in the bucket 1 are located, the label information of the file 1, the file 3, and the file 4 in the directory 2 in the bucket 1 is all the label 3. Similarly, the label information of the file 2 in the directory 2 in the bucket 1 is the label 4, and the label information of the file 1, the file 2, and the file 3 in the directory 1 in the bucket 2 is the label 5.

According to the classification label information shown in Table 2, the cloud management platform may classify files with same label information into a same file set. For example, the file 1, the file 2, and the file 4 in the directory 1 in the bucket 1 belong to a file set 1. The file 3 in the directory 1 in the bucket 1 belongs to a file set 2. The file 1, the file 3, and the file 4 in the directory 2 in the bucket 1 belong to a file set 3. The file 2 in the directory 2 in the bucket 1 belongs to a file set 4. The file 1, the file 2, and the file 3 in the directory 1 in the bucket 2 belong to a file set 5.

Step S720: Determine N data block sets based on the at least one file set.

The cloud management platform may determine the N data block sets based on the at least one file set, where N is a positive integer greater than or equal to 1. Each data block set includes one or more files in one of the at least one file set, and a size of each data block set is less than or equal to a first preset threshold.

Optionally, the cloud management platform may arrange and combine one or more files in one file set in sequence, to determine one or more of the N data block sets. A manner in which the cloud management platform arranges and combines a plurality of files in sequence is shown in FIG. 6. Alternatively, the cloud management platform may allocate one or more files in one file set based on an allocation algorithm, to determine one or more of the N data block sets. The size of each of the N data block sets is less than or equal to the first preset threshold.

In some embodiments, the cloud management platform may divide one file into a plurality of parts, so that the plurality of parts of the file respectively belong to different data block sets, and a size of each data block set is less than or equal to the first preset threshold. Alternatively, when the cloud management platform determines the data block set based on the allocation algorithm, the cloud management platform may not divide one file into a plurality of parts, to ensure that all data of one file can be stored in one storage device.

Optionally, the cloud management platform may combine one or more files in one file set into one data block set through data migration, for example, through a multi-segment interface of an object.

Optionally, the cloud management platform may record an attribute of each of the N data block sets. The attribute of each data block set includes at least one of the following: identification information of a storage bucket to which the data block set belongs, identification information of the data block set, the size of the data block set, and label information of the data block set. The identification information of the data block set may include, for example, a name or a number of the data block set. The label information of the data block set may be label information of a file included in the data block set.

For example, it is assumed that attributes of the N obtained data block sets are shown in Table 3.

**Table 3 Attribute table of a data block set**

| Identification information of a storage bucket | Identification information of the data block set | Size of the data block set | Label information of the data block set |
|---|---|---|---|
| Internal bucket 1 | Data block set 1 | 10 GB | Label 1 |
| Internal bucket 1 | Data block set 2 | 10 GB | Label 1 |
| Internal bucket 1 | Data block set 3 | 10 GB | Label 2 |
| Internal bucket 1 | Data block set 4 | 10 GB | Label 3 |
| Internal bucket 1 | Data block set 5 | 10 GB | Label 4 |
| Internal bucket 1 | Data block set 6 | 10 GB | Label 5 |

As shown in Table 3, the data block set 1 may be stored in the internal bucket 1, the size of the data block set 1 is 10 GB, and the label information of the data block set 1 is the label 1. The internal bucket 1 is a storage bucket managed by the cloud management platform and is irrelevant to the tenant. In other words, the tenant may be unaware of the internal bucket 1.

Optionally, the cloud management platform may generate a first mapping relationship, and the first mapping relationship may indicate a storage location of each file. The storage location of each file may include identification information of a data block set in which each file is located. The storage location of each file may further include an offset address of each file in the data block set and/or an internal storage bucket in which each file is located.

For example, the first mapping relationship may be shown in Table 4. The storage location of the file may be represented by an array. A format of the array is (internal storage bucket in which the file is located, data block set in which the file is located, offset address of the file in the data block set). In other words, at the storage location of the file, a 1^{st} piece of data indicates the internal storage bucket in which the file is located, a 2^{nd} piece of data indicates the data block set in which the file is located, and a 3^{rd} piece of data indicates the offset address of the file in the data block set.

**Table 4 First mapping relationship table**

| Identification information of a storage bucket | Name of a file | Storage location of the file |
|---|---|---|
| Bucket 1 | Directory 1/File 1 | (Internal bucket 1, data block set 1, offset address 1) |
| Bucket 1 | Directory 1/File 2 | (Internal bucket 1, data block set 1, offset address 2) |
| Bucket 1 | Directory 1/File 3 | (Internal bucket 1, data block set 3, offset address 3) |
| Bucket 1 | Directory 1/File 4 | (Internal bucket 1, data block set 2, offset address 4) |
| Bucket 1 | Directory 2/File 1 | (Internal bucket 1, data block set 4, offset address 5) |
| Bucket 1 | Directory 2/File 2 | (Internal bucket 1, data block set 5, offset address 6) |
| Bucket 1 | Directory 2/File 3 | (Internal bucket 1, data block set 4, offset address 7) |
| Bucket 1 | Directory 2/File 4 | (Internal bucket 1, data block set 4, offset address 8) |
| Bucket 2 | Directory 1/File 1 | (Internal bucket 1, data block set 6, offset address 9) |
| Bucket 2 | Directory 1/File 2 | (Internal bucket 1, data block set 6, offset address 10) |
| Bucket 2 | Directory 1/File 3 | (Internal bucket 1, data block set 6, offset address 11) |

As shown in Table 4, the first mapping relationship may indicate that the storage location of the file 1 in the directory 1 in the bucket 1 is (internal bucket 1, data block set 1, the offset address 1). In other words, the file 1 in the directory 1 in the bucket 1 is located in the data block set 1 in the internal bucket 1, and an offset address of the file 1 in the data block set 1 is the offset address 1. The data block set in which each file is located and the specific location of each file in the data block set may be determined based on the first mapping relationship.

Step S730: Determine M check data block sets based on the N data block sets.

The cloud management platform may determine the M check data block sets based on the N data block sets. The M check data block sets are for recovering one or more of the N data block sets when a fault occurs, and M is a positive integer greater than or equal to 1.

Optionally, the cloud management platform may determine, based on an EC technology, the M check data block sets corresponding to the N data block sets. A specific EC technology is not limited in this embodiment of this application. For example, the EC technology may include an array erasure code (array code), a Reed-Solomon (Reed-Solomon, RS) erasure code, and a low-density parity check erasure code (low-density parity check code, LDPC). Alternatively, the cloud management platform may determine, based on another check method, the M check data block sets corresponding to the N data block sets. A specific check method is not limited in this embodiment of this application. When a maximum of M pieces of data in the N data block sets and the M check data block sets are faulty, the cloud management platform may recover the faulty data based on data other than the faulty data, to enhance data storage reliability.

Optionally, the cloud management platform may directly calculate the M check data block sets based on the N data block sets. Alternatively, as shown in FIG. 8, the cloud management platform may divide each of the N data block sets into P data blocks, and determine a p^{th} check data block in each of the M check data block sets based on a p^{th} data block in each of the N data block sets, to determine the M check data block sets. Each of the M check data block sets includes P check data blocks. P is a positive integer greater than or equal to 1, and p=1, ..., or P.

FIG. 8 is a diagram of determining a check data block set according to an embodiment of this application. FIG. 8 includes a data block set 810, a data block set 820, and a check data block set 830. Both the data block set 810 and the data block set 820 include P data blocks, and the P data blocks are respectively a 1^{st} data block to a P^{th} data block. The cloud management platform may determine, by using the EC technology, a 1^{st} check data block in the check data block set 830 based on the 1^{st} data block in the data block set 810 and the 1^{st} data block in the data block set 820. Similarly, the cloud management platform may determine, by using the EC technology, a p^{th} check data block in the check data block set 830 based on the p^{th} data block in the data block set 810 and the p^{th} data block in the data block set 820, where p=1, ..., or P.

The following uses an RS technology as an example for description. It is assumed that a value of N is 5 and a value of M is 3, N+M is 8. The cloud management platform may concatenate a p^{th} data block in each of the five data block sets into a matrix D. When the five data blocks are respectively D₁, D₂, D₃, D₄, and D₅, D=[D₁, D₂, D₃, D₄, D₅]^{T}, where T represents transposition. If a quantity of rows of each of the five data blocks is d₁ and a quantity of columns of each of the five data blocks is d₂, a quantity of rows of the matrix D is 5*d₁ and a quantity of columns of the matrix D is d₂. The cloud management platform may further construct a matrix B, where a quantity of rows of the matrix B is 8*d₁, and a quantity of columns of the matrix B is d₂. In addition, any five row vectors of the matrix B are independent of each other, in other words, a 5*5 matrix including any five row vectors is reversible. The cloud management platform may further determine a matrix C based on B*D=C, and determine a p^{th} check data block in each of the three check data block sets based on C=[D, C₁, C₂, C₃]^{T}, where the three check data blocks are respectively C₁, C₂, and C₃.

For example, the cloud management platform may represent each data block set in a matrix form, or may represent a data block in each data block set in a matrix form.

In some embodiments, a size of a p^{th} data block in each data block set and/or a size of a p^{th} check data block in each check data block set are/is less than or equal to a second preset threshold. A value of the second preset threshold is not limited in this embodiment of this application. For example, the value of the second preset threshold may be 1 megabyte (megabyte, MB), 2 MB, or 5 MB.

In some embodiments, attributes of the N data block sets are the same. An attribute of each data block set is determined based on an attribute of a file included in each data block set. The N data blocks are respectively stored in N storage devices, and the N storage devices are a group of storage devices.

For example, the group of storage devices may be a group of storage devices whose physical locations are close to each other. For example, the group of storage devices may be storage devices located on a same rack. Alternatively, the group of storage devices may be storage devices located at a same location on different racks. Alternatively, the group of storage devices may be a group of storage devices whose identification information is similar. For example, when the identification information of the group of storage devices is a digit, identification information of storage devices in the group of storage devices may be in ascending or descending order.

In other words, the cloud management platform may determine at least one data block set based on the configuration information and the at least one file of the tenant. The cloud management platform may further respectively store the N data block sets with the same attribute in the at least one data block set in the N storage devices. The cloud management platform may further determine the M check data block sets based on the N data block sets with the same attribute, and respectively store the M check data block sets in M storage devices.

Step S740: Respectively store the N data block sets and the M check data block sets in N+M storage devices.

The cloud management platform may respectively store the N data block sets in the N storage devices, and may further respectively store the M check data block sets in the M storage devices. The N storage devices and the M storage devices are different devices.

Optionally, after determining the N complete data block sets, the cloud management platform may directly store the N complete data block sets in the N storage devices respectively. After determining the M complete check data block sets, the cloud management platform may further directly store the M complete check data block sets in the M storage devices respectively.

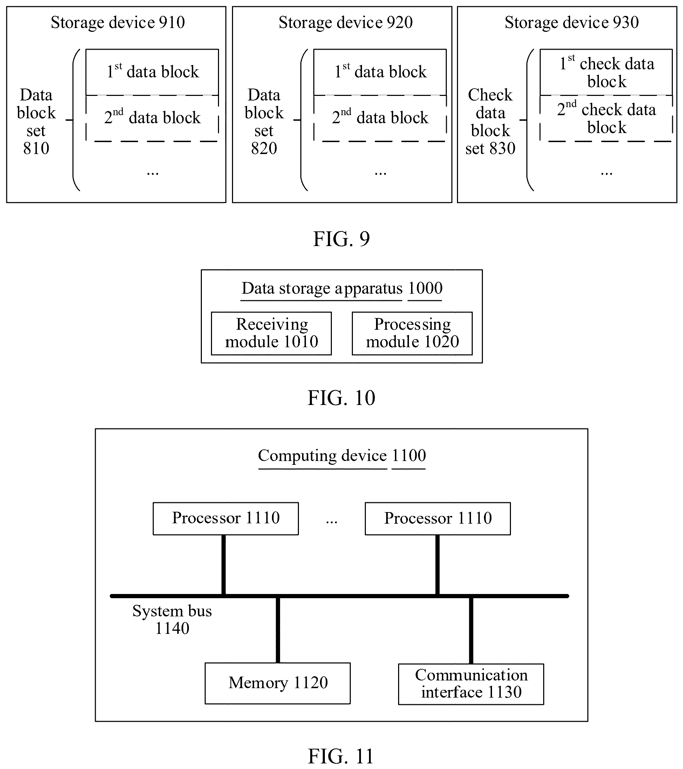

Optionally, as shown in FIG. 9, after determining the p^{th} check data block in each of the M check data block sets based on the p^{th} data block in each of the N data block sets, the cloud management platform may respectively store the p^{th} data block in each of the N data block sets in the N storage devices, and may further respectively store the p^{th} check data block in each of the M check data block sets in the M storage devices.

FIG. 9 is a diagram of storing the N data block sets and the M check data block sets in the N+M storage devices according to an embodiment of this application. FIG. 9 includes a storage device 910, a storage device 920, and a storage device 930. After determining the 1^{st} check data block in the check data block set 830 based on the 1^{st} data block in the data block set 810 and the 1^{st} data block in the data block set 820 in FIG. 8, the cloud management platform may store the 1^{st} data block in the data block set 810 in the storage device 910, store the 1^{st} data block in the data block set 820 in the storage device 920, and store the 1^{st} check data block in the check data block set 830 in the storage device 930. Similarly, after a 2^{nd} check data block in the check data block set 830 is determined based on a 2^{nd} data block in the data block set 810 and a 2^{nd} data block in the data block set 820, the 2^{nd} data block in the data block set 810, the 2^{nd} data block in the data block set 820, and the 2^{nd} check data block in the check data block set 830 may be respectively stored in the storage device 910, the storage device 920, and the storage device 930.

For example, at least two of the three storage devices in FIG. 9 may be located in a same storage device repository or different storage device repositories.

For example, after respectively storing the p^{th} data block in each of the N data block sets and the p^{th} check data block in each of the M check data block sets in the N+M storage devices, the cloud management platform may continue to determine a (p+1)^{th} check data block in each of the M check data block sets based on a (p+1)^{th} data block in each of the N data block sets. The cloud management platform may further respectively store the (p+1)^{th} data block in each of the N data block sets and the (p+1)^{th} check data block in each of the M check data block sets in the N+M storage devices. Each data block in an n^{th} data block set in the N data block sets is stored in an n^{th} storage device in the N storage devices, and each data block in the n^{th} data block set is continuously stored in the n^{th} storage device, where n=1, ..., or N. Each check data block in an m^{th} check data block set in the M check data block sets is stored in an m^{th} storage device in the M storage devices, and each check data block in the m^{th} check data block set is continuously stored in the m^{th} storage device, where m=1, ..., or M.

Optionally, P data blocks in one data block set are continuously stored in one storage device, and P check data blocks in one check data block set are continuously stored in one storage device.

Optionally, the cloud management platform may generate a second mapping relationship, where the second mapping relationship indicates a storage location of each data block set. The storage location of each data block set may include identification information of a storage device in which each data block set is located. The storage location of each data block set may further include an offset address of each data block set in the storage device.

For example, the second mapping relationship may be shown in Table 5. The storage location of the data block set may be represented by an array. A format of the array is (storage device in which the data block set is located, offset address of the data block set in the storage device). In other words, a 1^{st} piece of data in the storage location of the data block set indicates the storage device in which the data block set is located, and a 2^{nd} piece of data indicates the offset address of the data block set in the storage device.

**Table 5 Second mapping relationship table**

| Identification information of a data block set | Storage location of the data block set |
|---|---|
| Data block set 1 | (Storage device 1, offset address 12) |
| Data block set 2 | (Storage device 1, offset address 13) |
| Data block set 3 | (Storage device 1, offset address 14) |
| Data block set 4 | (Storage device 1, offset address 15) |
| Data block set 5 | (Storage device 1, offset address 16) |
| Data block set 6 | (Storage device 1, offset address 17) |

As shown in Table 5, the second mapping relationship may indicate that the storage location of the data block set 1 is (storage device 1, offset address 12). In other words, the data block set 1 is located in the storage device 1, and the offset address of the data block set 1 in the storage device 1 is the offset address 12. The storage device in which each data block set is located and the specific location of each data block set in the storage device may be determined based on the second mapping relationship.

It should be understood that Table 1 to Table 5 are merely examples for description, and Table 1 to Table 5 may alternatively be represented in another form (for example, a matrix, an array, or a function). This is not limited in this embodiment of this application. A specific form of a part of data in Table 1 to Table 5 is not limited in this embodiment of this application. For example, the part of data in Table 1 to Table 5 may include at least one character, and the at least one character may include any one or more of a letter, a digit, and a symbol. Alternatively, a part of data in Table 1 to Table 5 may be represented in a form of a matrix, an array, a function, or the like.

Optionally, the cloud management platform may generate a third mapping relationship, where the third mapping relationship indicates a storage location of each check data block set. The storage location of each check data block set may include identification information of a storage device in which each check data block set is located. The storage location of each check data block set may further include an offset address of each check data block set in the storage device. A specific representation form of the third mapping relationship is similar to that of the second mapping relationship. Details are not described herein again.

In this embodiment of this application, the cloud management platform may combine at least one file with a same attribute into one data block set, and store the data block set in one storage device. In other words, one file of the tenant may be stored in one storage device to the fullest extent, and a plurality of files with a same attribute of the tenant may be stored in one storage device to the fullest extent. Therefore, when the one or more files are retrieved, a quantity of storage devices that need to be accessed is small. Therefore, time for retrieving the file can be reduced, and file retrieval efficiency can be improved. In addition, a manner of determining the check data block in the check data block set based on the data block in the data block set can reduce internal memory overheads during calculation of the check data block set.

FIG. 10 is a diagram of a structure of a data storage apparatus according to an embodiment of this application. The data storage apparatus 1000 in FIG. 10 includes a receiving module 1010 and a processing module 1020. The data storage apparatus 1000 in FIG. 10 may be used in a cloud management platform, for example, the cloud management platform in FIG. 1 or FIG. 2.

The receiving module 1010 may be configured to receive first request information of a tenant, where the first request information is for obtaining a first file. The receiving module 1010 may be configured to perform step S310 in FIG. 3 and step S410 in FIG. 4.

The processing module 1020 may be configured to determine, based on the first request information, a first data block set in which the first file is located. The processing module 1020 may be further configured to determine, based on the first data block set, a first storage device in which the first data block set is located, and read the first file from the first storage device. The processing module 1020 may perform steps S320 to S340 in FIG. 3, steps S420 and S430 in FIG. 4, and steps S710 to S740 in FIG. 7.

Both the receiving module 1010 and the processing module 1020 may be implemented by software, or may be implemented by hardware. For example, the following uses the receiving module 1010 as an example to describe an implementation of the receiving module 1010. Similarly, for an implementation of the processing module 1020, refer to the implementation of the receiving module 1010.

The module is used as an example of a software functional unit, and the receiving module 1010 may include code run on a computing instance. The computing instance may include at least one of a physical host (a computing device), a virtual machine, and a container. Further, there may be one or more computing instances. For example, the receiving module 1010 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed on a same VPC, or may be distributed on a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the receiving module 1010 may include at least one computing device, for example, a server. Alternatively, the receiving module 1010 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the receiving module 1010 may be distributed in a same region, or may be distributed in different regions. The plurality of computing devices included in the receiving module 1010 may be distributed in a same AZ, or may be distributed in different AZs. Similarly, the plurality of computing devices included in the receiving module 1010 may be distributed in a same VPC, or may be distributed in a plurality of VPCs. The plurality of computing devices may be any combination of computing devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the receiving module 1010 may be configured to perform any step in the foregoing methods, and the processing module 1020 may be configured to perform any step in the foregoing methods. Steps implemented by the receiving module 1010 and the processing module 1020 may be specified as required. The receiving module 1010 and the processing module 1020 respectively implement different steps in the foregoing methods to implement all functions of the foregoing apparatus.

In addition, the apparatus embodiments and the method embodiments provided in the foregoing embodiments belong to a same concept. For specific implementation processes thereof, refer to the method embodiments. Details are not described herein again.

The method provided in embodiments of this application may be performed by a computing device, and the computing device may also be referred to as a computer system. The computing device may include a hardware layer, an operating system layer running above the hardware layer, and an application layer running above the operating system layer. The hardware layer includes hardware, for example, a processing unit, an internal memory, and a memory control unit. Subsequently, functions and structures of the hardware are described in detail. The operating system is any one or more computer operating systems through a process (process), for example, a Linux operating system, a Unix operating system, an Android operating system, an iOS operating system, or a Windows operating system, that implement service processing. The application layer includes applications such as a browser, an address book, continuously software, and instant messaging software. In addition, optionally, the computer system is a handheld device, for example, a smartphone, or a terminal device, for example, a personal computer. This is not particularly limited in this application, provided that the method according to embodiments of this application can be implemented. The method provided in embodiments of this application may be performed by the computing device or a functional module that is in the computing device and that can invoke and execute a program.

FIG. 11 is a block diagram of a structure of a computing device 1100 according to an embodiment of this application. The computing device 1100 may be a server, a computer, or another device with a computing capability. The computing device 1100 shown in FIG. 11 includes at least one processor 1110 and a memory 1120.

It should be understood that quantities of processors and memories in the computing device 1100 are not limited in this application.

The processor 1110 executes instructions in the memory 1120, so that the computing device 1100 implements the method provided in this application. Alternatively, the processor 1110 executes instructions in the memory 1120, so that the computing device 1100 implements the functional modules provided in this application to implement the method provided in this application.

Optionally, the computing device 1100 further includes a communication interface 1130. The communication interface 1130 uses a transceiver module, for example, but not limited to, a network interface card or a transceiver, to implement communication between the computing device 1100 and another device or a communication network.

Optionally, the computing device 1100 further includes a system bus 1140. The processor 1110, the memory 1120, and the communication interface 1130 are separately connected to the system bus 1140. The processor 1110 can access the memory 1120 through the system bus 1140. For example, the processor 1110 can read and write data or execute code in the memory 1120 through the system bus 1140. The system bus 1140 is a peripheral component interconnect express (peripheral component interconnect express, PCI) bus, an extended industry standard architecture (extended industry standard architecture, EISA) bus, or the like. The system bus 1140 is classified into an address bus, a data bus, a control bus, or the like. For ease of representation, only one bold line is used to represent the bus in FIG. 11, but this does not mean that there is only one bus or only one type of bus.

In a possible implementation, the processor 1110 mainly functions to interpret instructions (or code) of a computer program and process data in computer software. The instructions of the computer program and data in the computer software can be stored in a buffer of the memory 1120 or the processor 1110.

Optionally, the processor 1110 may be an integrated circuit chip and has a signal processing capability. By way of example but not limitation, the processor 1110 is a general-purpose processor, a digital signal processor (digital signal processor, DSP), an ASIC, an FPGA or another programmable logic device, a discrete gate or transistor logic device, or a discrete hardware component. The general-purpose processor is a microprocessor or the like. For example, the processor 1110 is a central processing unit (central processing unit, CPU).

The memory 1120 can provide running space for a process in the computing device 1100. For example, the memory 1120 stores a computer program (specifically, code of the program) used to generate the process. After the computer program is run by the processor to generate the process, the processor allocates corresponding storage space to the process in the memory 1120. Further, the storage space further includes a text segment, an initial data segment, an uninitialized data segment, a stack segment, a heap segment, and the like. The memory 1120 stores, in the storage space corresponding to the process, data generated during running of the process, for example, intermediate data or process data.

Optionally, the memory is also referred to as an internal memory, and a function of the memory is to temporarily store operation data in the processor 1110 and data exchanged with an external memory such as a hard disk drive. As long as the computer is running, the processor 1110 transfers data that needs to be calculated to the internal memory for calculation, and transmits a result after the calculation is completed.

By way of example but not limitation, the memory 1120 is a volatile memory or a non-volatile memory, or may include both a volatile memory and a non-volatile memory. The non-volatile storage medium may be, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus DRAM, DRDRAM). It should be noted that the memory 1120 of the systems and methods described in this specification includes but is not limited to these and any memory of another proper type.

It should be understood that a structure of the foregoing enumerated computing device 1100 is merely an example for description, and this application is not limited thereto. The computing device 1100 in this embodiment of this application includes various hardware in a computer system in a conventional technology. For example, the computing device 1100 further includes a memory other than the memory 1120, for example, a magnetic disk memory. A person skilled in the art should understand that the computing device 1100 may further include another component necessary for implementing normal running. In addition, a person skilled in the art should understand that, based on a specific requirement, the computing device 1100 may further include a hardware device implementing another additional function. Moreover, a person skilled in the art should understand that the computing device 1100 may include only a component required for implementing embodiments of this application, and does not need to include all the components shown in FIG. 11.

An embodiment of this application further provides a computing device cluster. The computing device cluster includes at least one computing device. The computing device may be a server. In some embodiments, the computing device may alternatively be a terminal device like a desktop computer, a notebook computer, or a smartphone.

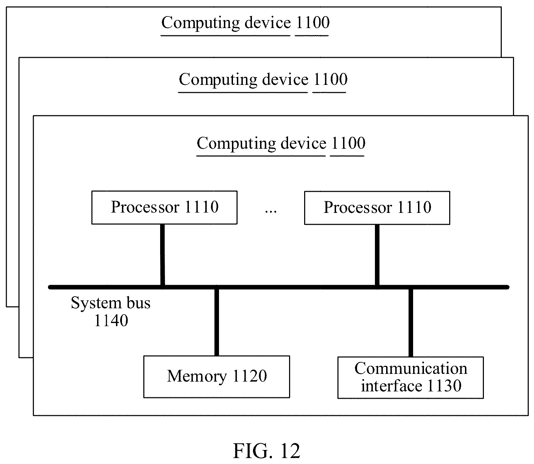

As shown in FIG. 12, the computing device cluster includes at least one computing device 1100. Memories 1120 of one or more computing devices 1100 in the computing device cluster may store same instructions used to perform the foregoing method.

In some possible implementations, the memories 1120 of the one or more computing devices 1100 in the computing device cluster may alternatively separately store a part of instructions used to perform the foregoing method. In other words, a combination of the one or more computing devices 1100 may jointly execute the instructions of the foregoing method.

It should be noted that memories 1120 in different computing devices 1100 in the computing device cluster may store different instructions, and the different instructions are separately used to perform some functions of the foregoing apparatus. In other words, the instructions stored in the memories 1120 in different computing devices 1100 may implement functions of one or more modules in the foregoing apparatus.

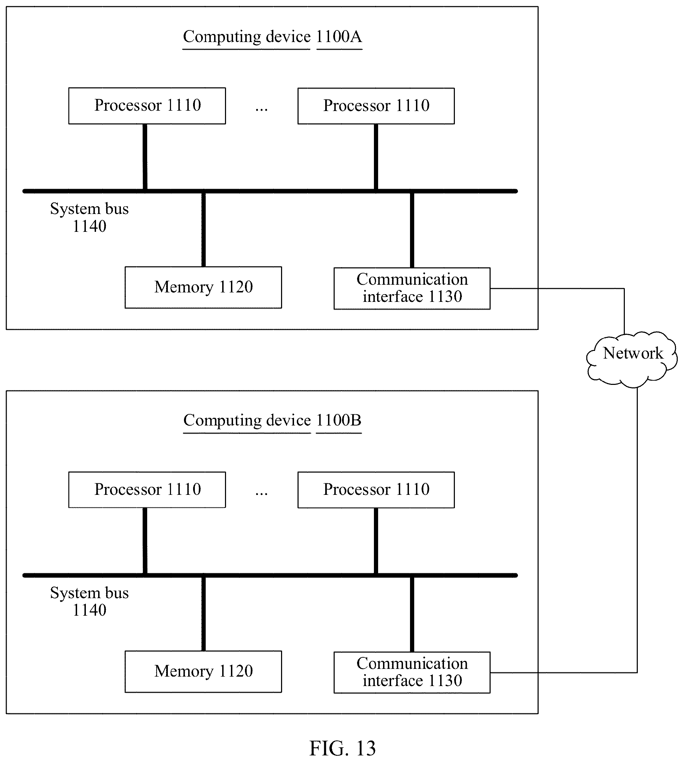

In some possible implementations, the one or more computing devices in the computing device cluster may be connected through a network. The network may be a wide area network, a local area network, or the like. FIG. 13 shows a possible implementation. As shown in FIG. 13, two computing devices 1100A and 1100B are connected through a network. Specifically, each computing device is connected to the network through a communication interface in the computing device.

It should be understood that functions of the computing device 1100A shown in FIG. 13 may alternatively be completed by a plurality of computing devices 1100. Similarly, functions of the computing device 1100B may alternatively be completed by a plurality of computing devices 1100.

In this embodiment, a computer program product including instructions is further provided. The computer program product may be software or a program product that includes the instructions and that can run on a computing device or that can be stored in any usable medium. When the computer program product runs on a computing device, the computing device is caused to perform the method provided above, or the computing device is caused to implement functions of the apparatus provided above.

In this embodiment, a computer program product including instructions is further provided. The computer program product may be software or a program product that includes the instructions and that can run on a computing device cluster or that can be stored in any usable medium. When the computer program product is run by the computing device cluster, the computing device cluster is caused to perform the method provided above, or the computing device cluster is caused to implement functions of the apparatus provided above.

In this embodiment, a computer-readable storage medium is further provided. The computer-readable storage medium may be any usable medium that can be stored by a computing device, or a data storage device such as a data center, including one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like. The computer-readable storage medium includes instructions. When the instructions in the computer-readable storage medium are executed on the computing device, the computing device is caused to perform the method provided above.

In this embodiment, a computer-readable storage medium is further provided. The computer-readable storage medium may be any usable medium that can be stored by a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is caused to perform the method provided above.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data storage method, wherein the method is applied to a cloud management platform, the cloud management platform is configured to manage an infrastructure that provides a cloud service, the infrastructure comprises a storage device cluster, the storage device cluster comprises a plurality of distributed storage devices, and the method comprises:
receiving first request information of a tenant, wherein the first request information is for obtaining a first file;
determining, based on the first request information, a first data block set in which the first file is located, wherein the first data block set comprises one or more files, attributes of the files comprised in the first data block set are the same, and the first data block set is stored in one of the plurality of distributed storage devices;
determining, based on the first data block set, a first storage device in which the first data block set is located; and
reading the first file from the first storage device.

2. The method according to claim 1, wherein the method further comprises:
receiving second request information of the tenant, wherein the second request information is for obtaining a plurality of files, and attributes of the plurality of files are the same;
determining, based on the second request information, a second data block set in which the plurality of files are located;
determining, based on the second data block set, a second storage device in which the second data block set is located; and
reading the plurality of files from the second storage device.

3. The method according to claim 1 or 2, wherein the attribute of the file comprises at least one of the following: identification information of a storage bucket to which the file belongs, a directory in which the file is located, storage time of the file, a storage type of the file, a size of the file, and a name of the file, and the storage type of the file indicates an access frequency of the file.

4. The method according to any one of claims 1 to 3, wherein the method further comprises:
receiving configuration information of the tenant, wherein the configuration information comprises an attribute of each of at least one file;
determining N data block sets based on the configuration information and the at least one file, wherein each of the N data block sets comprises one or more files in the at least one file, attributes of the files comprised in each data block set are the same, the N data block sets comprise the first data block set, and N is a positive integer greater than or equal to 1; and
respectively storing the N data block sets in N storage devices in the at least one distributed storage device.

5. The method according to claim 4, wherein determining the N data block sets based on the configuration information and the at least one file comprises:
determining at least one file set based on the attribute of each of the at least one file, wherein each file set comprises all files with a same attribute in the at least one file; and
determining the N data block sets based on the at least one file set, wherein each data block set comprises one or more files in one of the at least one file set, and a size of each data block set is less than or equal to a first preset threshold.

6. The method according to claim 4 or 5, wherein the method further comprises:
determining M check data block sets based on the N data block sets, wherein the M check data block sets are for recovering one or more of the N data block sets when a fault occurs, and M is a positive integer greater than or equal to 1; and
storing the M check data block sets in M storage devices in the at least one distributed storage device, wherein the M storage devices and the N storage devices are different storage devices.

7. The method according to claim 6, wherein each data block set comprises P data blocks, each check data block set comprises P check data blocks, and determining the M check data block sets based on the N data block sets comprises:
determining a p^{th} check data block in each of the M check data block sets based on a p^{th} data block in each of the N data block sets, wherein a size of the p^{th} data block and/or a size of the p^{th} check data block are/is less than or equal to a second preset threshold, p=1, ..., or P, and P is a positive integer greater than or equal to 1.

8. The method according to claim 7, wherein respectively storing the N data block sets in the N storage devices in the at least one distributed storage device comprises:
respectively storing the p^{th} data block in each of the N data block sets in the N storage devices; and
storing the M check data block sets in the M storage devices in the at least one distributed storage device comprises:
respectively storing the p^{th} check data block in each of the M check data block sets in the M storage devices.

9. The method according to claim 7 or 8, wherein P data blocks in one data block set are continuously stored in one storage device, and P check data blocks in one check data block set are continuously stored in one storage device.

10. The method according to any one of claims 4 to 9, wherein attributes of the N data block sets are the same, an attribute of each data block set is determined based on an attribute of a file comprised in each data block set, and the N storage devices are a group of storage devices.

11. The method according to any one of claims 4 to 10, wherein after determining the N data block sets based on the configuration information and the at least one file, the method further comprises:
generating a first mapping relationship, wherein the first mapping relationship indicates identification information of a data block set in which each file is located.

12. The method according to any one of claims 4 to 11, wherein after respectively storing the N data block sets in the N storage devices in the at least one distributed storage device, the method further comprises:
generating a second mapping relationship, wherein the second mapping relationship indicates identification information of a storage device in which each data block set is located.

13. A data storage apparatus, wherein the apparatus is used in a cloud management platform, the cloud management platform is configured to manage an infrastructure that provides a cloud service, the infrastructure comprises a storage device cluster, the storage device cluster comprises a plurality of distributed storage devices, and the apparatus comprises:
a receiving module, configured to receive first request information of a tenant, wherein the first request information is for obtaining a first file; and
a processing module, configured to determine, based on the first request information, a first data block set in which the first file is located, wherein the first data block set comprises one or more files, attributes of the files comprised in the first data block set are the same, and the first data block set is stored in one of the plurality of distributed storage devices, wherein
the processing module is further configured to determine, based on the first data block set, a first storage device in which the first data block set is located; and
the processing module is further configured to read the first file from the first storage device.

14. The apparatus according to claim 13, wherein the receiving module is further configured to receive second request information of the tenant, wherein the second request information is for obtaining a plurality of files, and attributes of the plurality of files are the same;
the processing module is further configured to determine, based on the second request information, a second data block set in which the plurality of files are located;
the processing module is further configured to determine, based on the second data block set, a second storage device in which the second data block set is located; and
the processing module is further configured to read the plurality of files from the second storage device.

15. The apparatus according to claim 13 or 14, wherein the attribute of the file comprises at least one of the following: identification information of a storage bucket to which the file belongs, a directory in which the file is located, storage time of the file, a storage type of the file, a size of the file, and a name of the file, and the storage type of the file indicates an access frequency of the file.

16. The apparatus according to any one of claims 13 to 15, wherein the receiving module is further configured to receive configuration information of the tenant, wherein the configuration information comprises an attribute of each of at least one file;
the processing module is further configured to determine N data block sets based on the configuration information and the at least one file, wherein each of the N data block sets comprises one or more files in the at least one file, attributes of the files comprised in each data block set are the same, the N data block sets comprise the first data block set, and N is a positive integer greater than or equal to 1; and
the processing module is further configured to respectively store the N data block sets in N storage devices in the at least one distributed storage device.

17. The apparatus according to claim 16, wherein the processing module is specifically configured to:
determine at least one file set based on the attribute of each of the at least one file, wherein each file set comprises all files with a same attribute in the at least one file; and
determine the N data block sets based on the at least one file set, wherein each data block set comprises one or more files in one of the at least one file set, and a size of each data block set is less than or equal to a first preset threshold.

18. The apparatus according to claim 16 or 17, wherein the processing module is further configured to:
determine M check data block sets based on the N data block sets, wherein the M check data block sets are for recovering one or more of the N data block sets when a fault occurs, and M is a positive integer greater than or equal to 1; and
store the M check data block sets in M storage devices in the at least one distributed storage device, wherein the M storage devices and the N storage devices are different storage devices.

19. The apparatus according to claim 18, wherein each data block set comprises P data blocks, each check data block set comprises P check data blocks, and the processing module is specifically configured to:
determine a p^{th} check data block in each of the M check data block sets based on a p^{th} data block in each of the N data block sets, wherein a size of the p^{th} data block and/or a size of the p^{th} check data block are/is less than or equal to a second preset threshold, p=1, ..., or P, and P is a positive integer greater than or equal to 1.

20. The apparatus according to claim 19, wherein the processing module is specifically configured to:
respectively store the p^{th} data block in each of the N data block sets in the N storage devices; and
respectively store the p^{th} check data block in each of the M check data block sets in the M storage devices.

21. The apparatus according to claim 19 or 20, wherein P data blocks in one data block set are continuously stored in one storage device, and P check data blocks in one check data block set are continuously stored in one storage device.

22. The apparatus according to any one of claims 16 to 21, wherein attributes of the N data block sets are the same, an attribute of each data block set is determined based on an attribute of a file comprised in each data block set, and the N storage devices are a group of storage devices.

23. The apparatus according to any one of claims 16 to 22, wherein after determining the N data block sets based on the configuration information and the at least one file, the processing module is further configured to generate a first mapping relationship, wherein the first mapping relationship indicates identification information of a data block set in which each file is located.

24. The apparatus according to any one of claims 16 to 23, wherein after respectively storing the N data block sets in the N storage devices in the at least one distributed storage device, the processing module is further configured to generate a second mapping relationship, wherein the second mapping relationship indicates identification information of a storage device in which each data block set is located.

25. A computing device cluster, comprising at least one computing device, wherein each computing device comprises a processor and a memory; and
a processor of the at least one computing device is configured to execute instructions stored in a memory of the at least one computing device, to cause the computing device cluster to perform the method according to any one of claims 1 to 12.

26. A computer program product comprising instructions, wherein when the instructions are run by a computing device cluster, the computing device cluster is caused to perform the method according to any one of claims 1 to 12.

27. A computer-readable storage medium, comprising computer program instructions, wherein when the computer program instructions are executed by a computing device cluster, the computing device cluster performs the method according to any one of claims 1 to 12.
